# EUROPÄISCHE PATENTSCHRIFT

(11) **EP 0 960 990 B1**
(45) Veröffentlichungstag und Bekanntmachung des Hinweises auf die Patenterteilung: **22.09.2004**
(21) Anmeldenummer: 99107965.8
(22) Anmeldetag: 22.04.1999
(51) Int. Cl.: E04D 3/366, E04D 1/36, E04D 12/00, E04D 13/18

(54) **Anordnung zum Abdecken einer geneigten Dachfläche**
Device for covering an inclined roof surface
Dispositif de recouvrement d'une toiture inclinée

(30) Priorität: 26.05.1998 CH 115298
(43) Veröffentlichungstag der Anmeldung: 01.12.1999
(73) Patentinhaber: ZZ WANCOR, 8105 Regensdorf (CH)
(72) Erfinder: Weibel, Johannes, 71116 Gärtringen (DE); Capeder, Philippe, 8053 Zürich (CH); Müller, Adolf, 5422 Oberehrendingen (CH)
(74) Vertreter: Troesch Scheidegger Werner AG

(56) Entgegenhaltungen:
- EP-A- 0 816 585
- DE-A- 19 526 671
- DE-C- 76 709
- FR-A- 942 113
- FR-A- 2 514 805
- GB-A- 702 593
- US-A- 4 478 013
- US-A- 5 356 675
- US-A- 5 571 338

## Beschreibung

Die vorliegende Erfindung betrifft eine Anordnung zum Abdecken einer geneigten Dachfläche sowie ein Verfahren zum Erzeugen einer Abdeckung einer geneigten Dachfläche.

Bei Bauten mit geneigten Dachflächen, wie insbesondere bei sogenannten Giebeldächern, werden in der Regel grossflächig Ziegel für das Abdecken verwendet. Alternativ dazu werden plattenartige Elemente, wie mineralische Platten oder sogenannte Eternitplatten, grossflächig verlegt. In allen bekannten Fällen ergibt sich ein grossflächig uniformes bzw. einheitliches Erscheinungsbild, das speziell bei grösseren Überbauungen monoton wirkt.

In der DE-76 709 c wird eine Dachabdeckung beschrieben mit Ziegeln, aufweisend rinnenartige Vertiefungen zum Abführen von Regenwasser,wie im Oberbegriff des Anspruchs 1 definiert. In der FR-2514 805 sind Dachelemente beschrieben, welche auf Profilen auf einer Dachkonstruktion befestigt werden. In der FR-942 113 wird eine Dachabdeckung beschrieben, welche integrierte Regenwasserablaufkanäle aufweist, welche das Regenwasser in seitliche Regenrinnen abführen. Die US-5 571 338 beschreibt eine Dachabdeckung, aufweisend photovoltaische Platten, welche auf einer Rahmenkonstruktion aufliegen. Die EP 816 585 schliesslich beschreibt Verbindungselemente für das zusammenhaltende Anordnen von zwei nebeneinanderliegenden Elemente.

Es ist eine Aufgabe der vorliegenden Erfindung, ein neues Dachsystem vorzuschlagen, welches sich von den heutigen Steildachlösungen erkennbar abhebt und welches gestalterische Möglichkeiten bietet. Erfindungsgemäss wird die gestellte Aufgabe mittels einer Anordnung gemäss dem Wortlaut nach Anspruch 1 gelöst.

Vorgeschlagen wird eine Anordnung zum Abdecken einer geneigten Dachfläche, welche einerseits durch im wesentlichen in Neigerichtung verlaufende, voneinander beabstandete, längsausgedehnte Profile bzw. Neigeprofile mit mindestens einer Auflagepartie für das Anordnen von Dachabdeckplatten gekennzeichnet ist. Weiter umfasst die Anordnung Dachabdeckplatten, deren Dimensionierung derart ist, dass sie je zwischen zwei benachbarte Neigeprofile positionierbar sind und den Abstand zwischen den benachbarten Neigeprofilen wenigsten nahezu überdecken.

Die Neigeprofile können unterschiedliche Querschnitte aufweisen, wobei bevorzugte Ausführungen in den abhängigen Ansprüchen 2 und 3 charakterisiert sind.

Erfindungsgemässen wird vorgeschlagen, zwischen den Neigeprofilen und quer dazu verlaufend sogenannte Auflageprofile vorzusehen, welche in etwa der Ausdehnung der Dachabdeckplatten in Neigerichtung entsprechend voneinander beabstandet angeordnet sind und je endständig auf Randauflagepartien der Neigeprofile an- bzw. aufliegen. Diese Auflageprofile können wiederum unterschiedliche Querschnitte aufweisen, wobei bevorzugte Ausführungsvarianten in den abhängigen Ansprüche 2 und 3 harakterisiert sind. Vorzugsweise sind diese Auflageprofile wieder lösbar fest mit den Neigeprofilen verbunden.

Sowohl die Neigeprofile wie auch die Auflageprofile können aus den verschiedensten Materialien gefertigt sein, wie beispielsweise aus verzinktem Blech, aus stranggepresstem Aluminium oder gar aus extrudierten, vorzugsweise verstärkten Kunststoffen. Im Falle der Verwendung von Kunststoffen ist es wesentlich, dass diese einerseits eine ausreichende Festigkeit aufweisen und andererseits Temperatur- und Witterungs-beständig sind, entsprechend den Anforderungen, welche sich beim Überdecken einer Dachkonstruktion ergeben.

Die Dachabdeckplatten weisen Haltepartien, wie beispielsweise die oben erwähnten Haltenasen, auf, welche entweder in Einkerbungen des Neigeprofiles eingreifen oder welche die Auflageprofile in Neigerichtung oberhalb hintergreifen, um die Dachabdeckplatten auf dem Dach sicher festzulegen.

Im sich gegenseitig überlappenden Bereich der Abdeckplatten weisen die Oberflächen im Kontaktbereich der beiden Platten vorzugsweise quer zur Neigerichtung verlaufende Einkerbungen oder Nuten auf, zur Bildung einer sogenannten aerodynamischen Sperre. Durch diese Rillen oder Einkerbungen wird gewährleistet, dass einerseits kein Wind durch diesen überlappenden Bereich in die unterhalb der Anordnung ausgebildete Dachkonstruktion eindringen kann sowie auch keine Nässe, beispielsweise im Falle von Regenschauern mit diese begleitenden Windböen.

Die Dachabdeckplatten können sowohl ziegelartig aus Ton gefertigt sein, oder aber aus irgendwelchen anderen geeigneten Materialien, wie beispielsweise mineralischen Materialien, aus gepressten Zementfasern, aus verstärkten Kunststoffen usw. Auch ist es möglich, Sonnenkollektor-Paneele als Dachabdeckplatten anzuordnen, wobei selbstverständlich die ganze Dachabdeckanordnung mittels Sonnenkollektoren versehen sein kann. In diesem Zusammenhang ist zu erwähnen, dass es selbstverständlich auch möglich ist, unterhalb der Dachabdeckanordnung Kollektoren, wie beispielsweise Wärmetauscherkollektoren, anzuordnen.

Auch ist es möglich, die Dachabdeckplatten farbig, gemustert etc. auszubilden, wobei selbstverständlich auch die Neige- und Auflageprofile farbig ausgebildet sein können.

Schlussendlich ist es möglich, im Überlappungsbereich je zwei benachbarte Dachabdeckplatten mittels Klammern fest miteinander zu verbinden, um beispielsweise bei sehr starken Windböen das sogenannte "Abdecken" eines Daches zu verhindern.

Weitere bevorzugte Ausführungsvarianten der erfindungsgemässen Anordnung sind in den abhängigen Ansprüchen charakterisiert.

Zur Erzeugung einer erfindungsgemässen Dachabdeckanordnung werden zunächst die Neigeprofile im Abstand ca. der Dachabdeckplatten in Neigerichtung parallel zueinander auf der darunterliegenden Dachkonstruktion angeordnet und fest mit dieser verbunden. Dabei ist es möglich, die Neigeprofile direkt auf der sogenannten Dachsparrenkonstruktion mit Querlattung anzuordnen, oder aber auf einer oberhalb der Sparrenkonstruktion angeordneten, zusätzlichen Isolationsschicht, welche zwischen Querlatten angeordnet ist.

In einem weiteren Verfahrensschritt werden quer zu den Neigeprofilen die Auflageprofile im Abstand entsprechend in etwa der Breite der Dachabdeckplatten angeordnet, wobei die Distanz-Feinajustierung entsprechend der Grösse des Daches zu erfolgen hat. Bekanntlich ist es durch Wahl eines grösseren oder kleineren Überlappungsbereiches zweier benachbarter Dachabdeckplatten möglich, die Distanz zwischen Dachtraufe und Dachgiebel derart zu überbrücken, dass immer ganze Dachabdeckplatten verwendet werden können und somit keine Dachabdeckplatten beispielsweise speziell dimensioniert werden müssen.

Anschliessend werden die Dachabdeckplatten angeordnet, wobei dies immer von der Dachtraufe zum Giebel, d.h. von unten nach oben, erfolgt.

Vorzugsweise wird für das Erzeugen einer erfindungsgemässen Dachabdeckanordnung eine speziell dazu entwickelte Lehre verwendet, mittels welcher sowohl die Distanz zwischen den Neigeprofilen wie auch die Distanz zwischen den Auflageprofilen vor dem Anordnen dieser Profile eingestellt werden kann.

Mittels der erfindungsgemäss vorgeschlagenen Dachabdeckanordnung ist es möglich, irgendwelche geneigten Dachflächen abzudecken, wie beispielsweise Giebeldächer bei Wohnhäusern oder geneigte Dächer bei Industriebauten usw. Insbesondere ist es möglich, mittels der erfindungsgemäss vorgeschlagenen Konstruktion gestalterische Elemente im Dachaufbau einzubauen, indem z.B. farbige Neigeprofile verwendet werden und unterschiedlich ausgestaltete, wie z.B. verschiedenfarbige, Dachabdeckplatten. Auch ist es mittels der erfindungsgemässen Konstruktion auf einfachste Art und Weise möglich, Solar- und fotovoltaische Elemente in eine Dachkonstruktion einzubauen. Im weiteren ermöglicht diese Konstruktion ein einfaches Auswechseln einzelner beschädigter Dachabdeckplatten, indem die Überlappung der einzelnen Dachabdeckplatten jeweils nur an zwei sich gegenüberliegenden Seitenkanten erfolgt. Durch das seitliche Ausbilden von rinnenartigen Profilen an den Neigeprofilen ist zudem gewährleistet, dass keine Feuchtigkeit, wie insbesondere Regenwasser, in die darunterliegende Dachkonstruktion gelangen kann. Schlussendlich bildet die erfindungsgemäss vorgeschlagene Konstruktion ein äusserst stabiles Gebilde, welches in der Regel auch begehbar ist.

Die Erfindung wird nun anschliessend beispielsweise und unter Bezug auf die beigefügten Figuren näher erläutert.

Dabei zeigen:
- Fig. 1: schematisch in Draufsicht das Erscheinungsbild einer erfindungsgemässen Dachabdeckanordnung,
- Fig. 2 und 2a: Neigeprofile im Querschnitt,
- Fig. 3a und 3b: Auflageprofile in Perspektive,
- Fig. 4: eine erfindungsgemässe Dachabdeckanordnung, in Neigerichtung gesehen,
- Fig. 5, 5a und 5b: erfindungsgemässe Dachabdeckanordnungen, im Neigequerschnitt gesehen,
- Fig. 6: die erfindungsgemässe Anordnung im Firstbereich,
- Fig. 7: die erfindungsgemässe Dachabdeckanordnung im Bereich der Dachtraufe,
- Fig. 8: die erfindungsgemässe Dachabdeckanordnung im Dachseitenbereich,
- Fig. 9a und 9b: erfindungsgemäss ausgebildete Dachabdeckplatten im sich überlappenden Bereich zweier benachbarter Platten,
- Fig. 10a bis 10c: in verschiedenen Ansichten eine mögliche Befestigungsvariante der Neigeprofile im Firstbereich,
- Fig. 11a und 11b: das Befestigen der Neigeprofile im Bereich der Traufe bzw. des unteren Dachendes,
- Fig. 12a bis 12c: das Anordnen von Sonnenkollektoren mit darauf integral angeordneten Abdeckelementen, und
- Fig. 13a und 13b: eine mögliche Ausführungsvariante einer Dachabdeckplatte mit darin integral angeordneten fotovoltaischen Elementen.

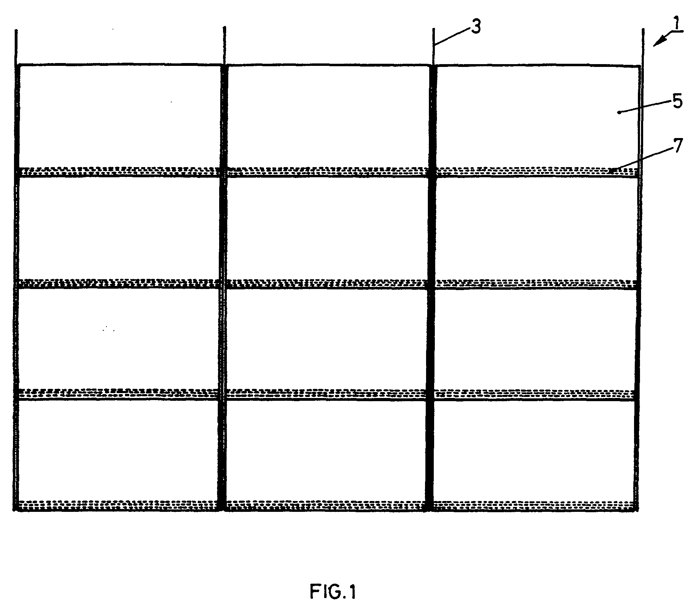

Fig. 1 zeigt schematisch in Draufsicht einen Ausschnitt einer erfindungsgemässen Dachabdeckanordnung 1, aufweisend in Neigerichtung die Neigeprofile 3 sowie die dazwischenliegenden Dachabdeckplatten 5, wobei je zwei benachbarte Dachabdeckplatten sich im Bereich, welcher mit 7 bezeichnet ist, überlappen.

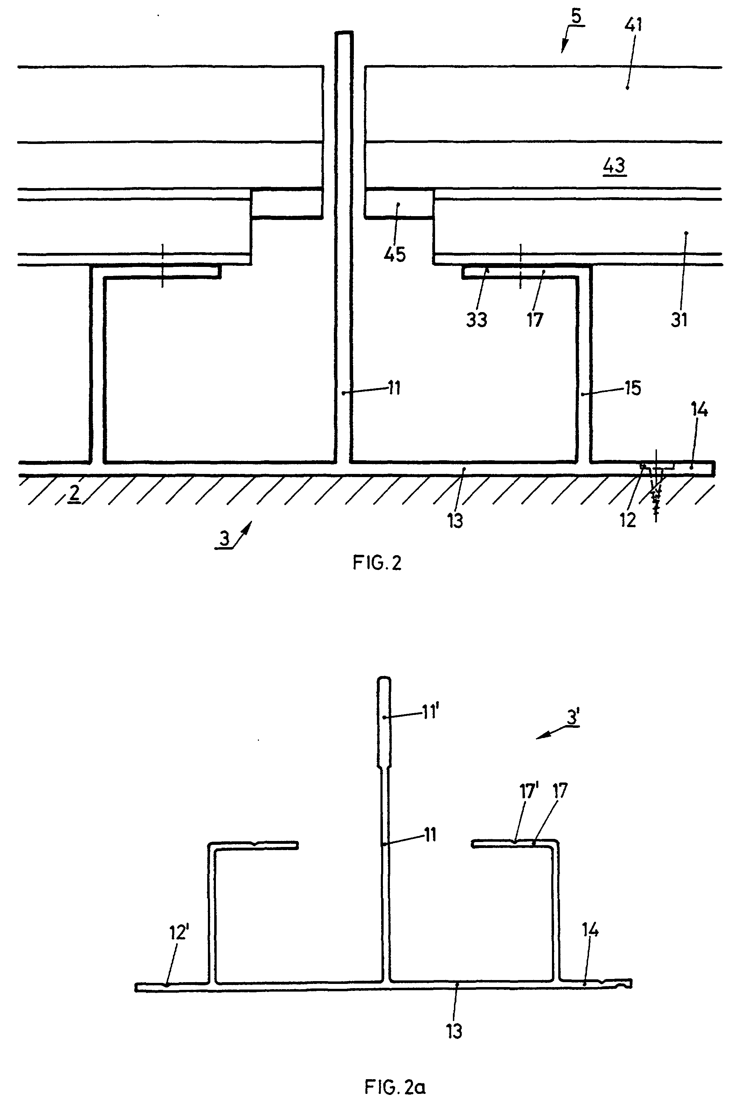

Fig. 2 zeigt im Querschnitt ein Neigeprofil 3, welches beispielsweise auf einer Dachkonstruktion 2, fest mit dieser verbunden angeordnet ist. Diese Verbindung kann entweder geschraubt, genagelt oder aber gar geklebt sein. Das Profil gemäss Fig. 2 ist im Querschnitt quasi U-förmig ausgebildet, aufweisend eine Basis 13, je seitlich senkrecht dazu verlaufende U-Schenkel 15, welche endständig einwärts gebogen sind zur Bildung von Auflagepartien 17. Das Neigeprofil gemäss Fig. 2 weist weiter je seitlich der beiden U-Schenkel vorstehende Randabschnitte 14 auf, welche eine erhöhte Auflagefläche auf der darunterliegenden Dachkonstruktion ergeben und welche zur Aufnahme der Befestigung (Schrauben 12) in die Unterkonstruktion dienen. Mittig von der U-Basis 13 aufragend ist ein mittlerer Steg 11 ausgebildet, welcher die beiden seitlichen U-Schenkel 15 deutlich überragt.

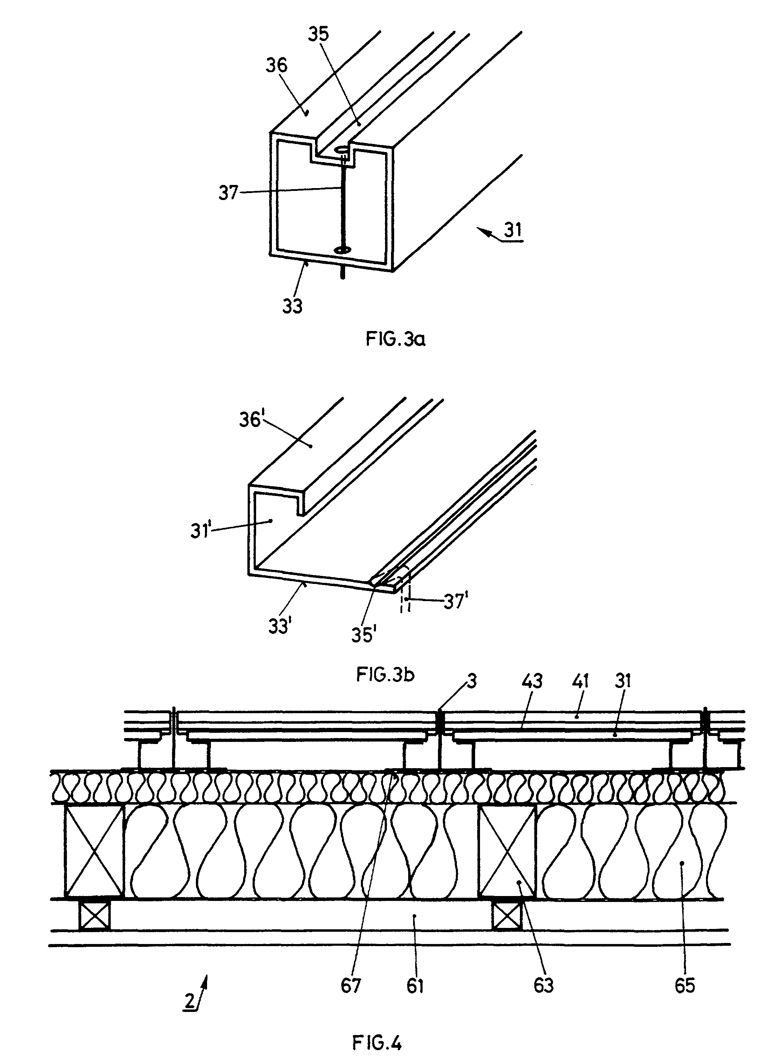

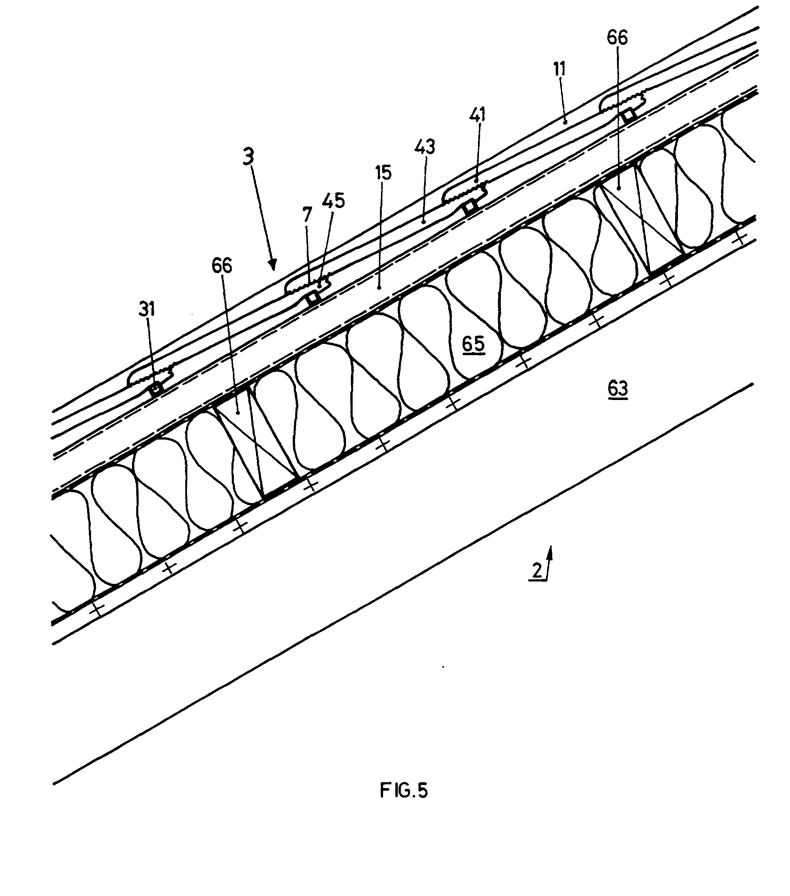

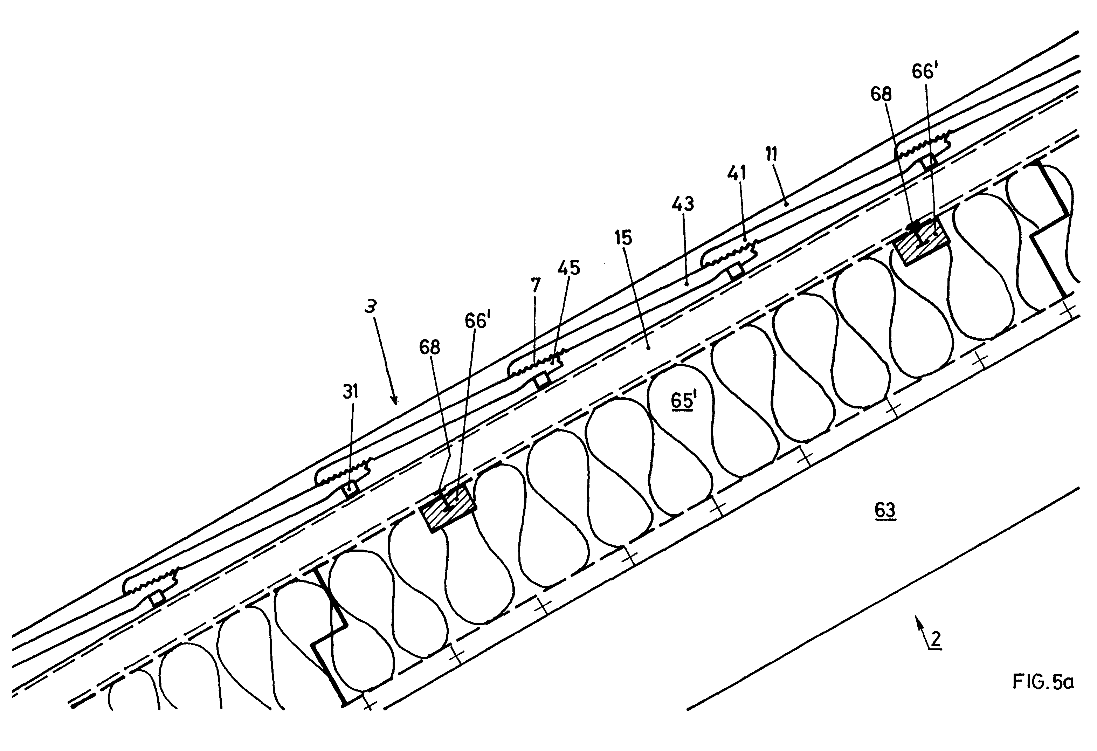

Auf den beiden Auflagepartien 17 angeordnet sind je ein Auflageprofil 31, auf welche unter Bezug auf die Figuren 3a und 3b noch näher eingegangen wird. Auf diesen Auflageprofilen 31 aufliegend, sind Dachabdeckplatten 5 angeordnet, wobei direkt auf dem Auflageprofil 31 gemäss Fig. 2 aufliegend die Dachabdeckplatte 43 aufliegt, welche an ihrem oberen Rand (in Fig. 2 nicht erkennbar) von der oberhalb liegenden Dachabdeckplatte 41 überlappt wird. Auch diesbezüglich wird unter Bezug auf Fig. 5 noch näher eingegangen. Schlussendlich in Fig. 2 sichtbar ist eine Haltenase 45, welche das Auflageprofil 31 hintergreift, um die Dachabdeckplatte 43 auf der Dachkonstruktion zu halten.

Fig. 2a zeigt eine leicht modifizierte Ausführungsvariante eines Neigeprofils 3' im Querschnitt, bei welchem der mittlere Steg 11 endständig im Bereich 11' eine Verdickung aufweist, welche dann aus statischen Gründen vorteilhaft bzw. notwendig ist, wenn der mittlere Steg 11, wie in Fig. 2a dargestellt, sehr dünn ausgebildet ist. Dadurch kann sich auch bei Temperaturveränderungen keine Verwindung des Neigeprofiles ergeben. Im weiteren sind im Profil gemäss Fig. 2a am Randabschnitt 14 sowie an den Auflagepartien 17 Nuten 17' bzw. 12' vorgesehen, welche als Anzeige bzw. Orientierungshilfe dienen für das Anbringen von Schrauben, Nieten, Stiften und dergleichen.

In den Fig. 3a und 3b sind in Querschnitts-Perspektive zwei mögliche Auflageprofile 31 dargestellt, wobei das Profil gemäss Fig. 3a einen weitgehendst quadratischen Querschnitt aufweist. Dabei liegt das Auflageprofil 31 mit seiner unteren Längsfläche 33 auf der Auflagepartie 17 auf, welche in den Fig. 3a und 3b nicht dargestellt ist. In der der Fläche 33 entgegengesetzten Profilfläche 36 ist eine Längseinkerbung bzw. Längsnut 35 vorgesehen, welche dazu vorgesehen ist, um Verbindungsmittel 37 aufzunehmen bzw. zu positionieren, mittels welchen das Auflageprofil 31, auf der Auflagefläche 17 aufliegend, mit dieser fest verbunden werden kann. Dabei kann es sich beispielsweise um eine Schraube, einen Nagel oder irgendwelche andere geeignete Verbindungsmittel handeln. Die Fläche 36 ist weiter dazu vorgesehen, um darauf aufliegend die Dachabdeckplatten 5 aufzunehmen, beispielsweise die Dachabdeckplatte 43 aus Fig. 2. Die in Neigerichtung obere seitliche Endkante der Fläche 36 wird dabei durch beispielsweise die Nasen 45 hintergriffen, um eine Dachabdeckplatte festzuhalten.

Das Profil gemäss Fig. 3b ist wesentlich einfacher in der Herstellung als das Profil gemäss Fig. 3a und hat weiter den Vorteil, dass es einfacher auf der Auflagepartie 17 des Neigeprofiles angeordnet werden kann. Vorzugsweise ist wiederum in der unteren Fläche 31' eine Längsnut 35' vorgesehen, zum Aufnehmen bzw. Anordnen von Verbindungsmitteln 37' für das feste Verbinden mit der Auflagepartie 17 des Neigeprofils. Die der Fläche 33' gegenüberliegende Fläche 36' ist wiederum vorgesehen für das aufliegende Aufnehmen von Dachabdeckplatten, welche mit ihren Haltenasen wiederum die Seitenkante der Fläche 36' hintergreifen.

In Fig. 4 ist nun eine Dachkonstruktion mit der erfindungsgemässen Dachabdeckanordnung, in Neigerichtung gesehen, im Querschnitt dargestellt, wobei drei nebeneinander angeordnete Neigeprofile 3 dargestellt sind. Die Dachkonstruktion 2 weist eine Schalung bzw. ein Täfer 61 auf mit der darüberliegenden eigentlichen Dachkonstruktion, umfassend Sparren 63 sowie dazwischen und darüber angeordnete Isolationsmatten 65. Über dem wasserdichten Unterdach 67 ist die erfindungsgemässe Dachabdeckanordnung angeordnet, aufweisend die Neigeprofile 3, die Auflageprofile 31 sowie die darauf angeordneten Dachabdeckplatten 41 und 43.

Fig. 5 zeigt die Dachkonstruktion im Querschnitt, gesehen entlang der Neigelängsrichtung, wobei nun deutlich das Überlappen zweiter benachbarter Dachabdeckplatten 41 und 43 im mit der Zahl 7 bezeichneten Bereich erkennbar ist. Weiter soll mit der Dachkonstruktion 2 gemäss Fig. 5 gezeigt werden, dass die erfindungsgemässe Dachabdeckanordnung auch direkt auf eine oberhalb der Sparren angeordnete Isolationskonstruktion aufgebracht werden kann. Dabei werden die Neigeprofile 3 direkt auf Querlatten 66 beispielsweise aufgeschraubt, zwischen welchen die Isolationsmatten 65 angeordnet sind.

Fig. 5a zeigt eine Modifikation der Dachkonstruktion 2 aus Fig. 5, indem hier auf Querlatten 66 verzichtet wird. Anstelle der Isolationsmatten 65 werden trittfeste, beispielsweise extrudiertes Polystyrol enthaltende Dämmplatten direkt auf den Sparren 63 angeordnet, welche Dämmplatten 65' eingelassene Montageelemente 66' enthalten, welche beispielsweise aus Holz oder einem anderen geeigneten Material bestehen können. Mittels beispielsweise Schrauben oder anderen Verbindungselementen oder Stiften 68 können so die Neigeprofile 3 direkt auf den trittfesten Dämmplatten 65' aufgeschraubt bzw. angeordnet werden. Der Vorteil dieser Dachkonstruktion liegt darin, dass auf die Querlatten 66 verzichtet werden kann und Dämmplatten jeglicher Grösse verwendet werden können, welche vorzugsweise stirnseitig abgestuft sind, um mit benachbarten Dämmplatten eine gestufte Übergangsnaht zu bilden. Die Montagebereiche 66' können dabei an irgendeiner Stelle der Dämmplatte angeordnet werden, auch ist es möglich, anstelle der zwei Montageelemente 66' lediglich ein Element jeweils an einer Dämmplatte 65' anzuordnen. Ein weiterer Vorteil liegt darin, dass die Dämmplatten beim Extrudieren direkt mit dem Montagebereich 66' versehen werden können, womit das Aufbringen der erfindungsgemässen Abdeckanordnung auf der Baustelle einfach erfolgen kann.

Fig. 5b zeigt eine weitere Ausführungsvariante der Dachkonstruktion aus Fig. 5, welche gegenüber derjenigen in Fig. 5a leicht modifiziert ist. Ebenfalls in der Dachkonstruktion gemäss Fig. 5b sind anstelle der Isolationsmatten trittfeste Dämmplatten 65" angeordnet, wobei es sich wiederum um ein druckfestes Styrolpolymer handeln kann. Zwischen Dachsparren 63 und Dämmplatten 65" ist einerseits eine Dachschalung 110 angeordnet, sowie eine Dampfsperrfolie 109. Der Bereich 105, wo zwei Dämmplatten 65" aneinanderstossen ist nun in Abänderung zur Ausführungsvariante, dargestellt in Fig. 5a eine Abstufung vorgesehen, derart, dass ein Montageelement 66" eingehängt angeordnet werden kann, so dass auf das Einlassen bzw. Anordnen des in Fig. 5a dargestellten Montageelementes 66' in die Dämmplatte verzichtet werden kann, was natürlich herstelltechnisch günstiger ist. Analog Fig. 5a kann nun auf diesem Montageelement 66" erneut das Neigeprofil 3, beispielsweise durch das Befestigen mittels Nieten, angeordnet werden. Auf dem seitlichen U-Schenkel 15 des Neigeprofiles 3 aufliegend sind die Auflageprofile 31' erkennbar, welche dem Profil, dargestellt in Fig. 3b, entsprechen. Am Auflageprofil 31' eingehängt angeordnet sind schliesslich die Dachabdeckplatten 41 bzw. 43 erkennbar.

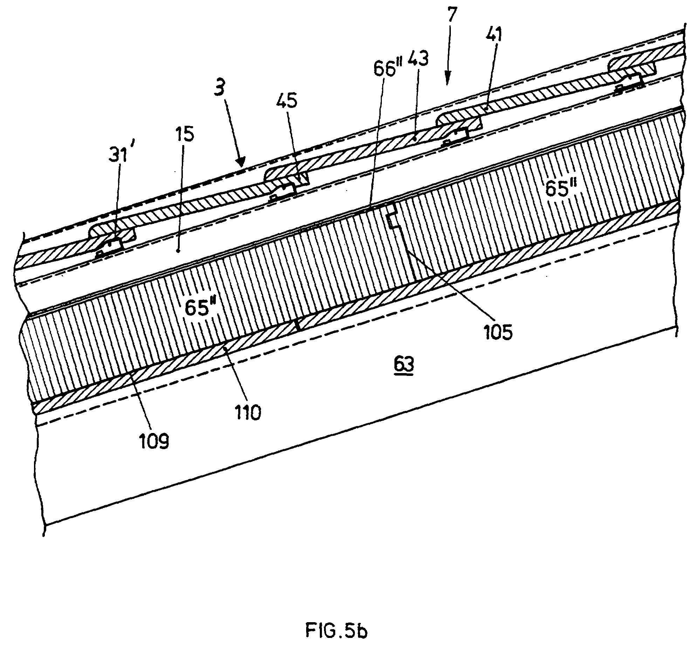

Fig. 6 zeigt eine Dachkonstruktion im Firstbereich, wo die Firstabdeckung einer speziell dazu ausgebildeten Firstabdeckplatte 47 erfolgt. Weiter erkennbar in Fig. 6 ist der sogenannte Firstbalken 68.

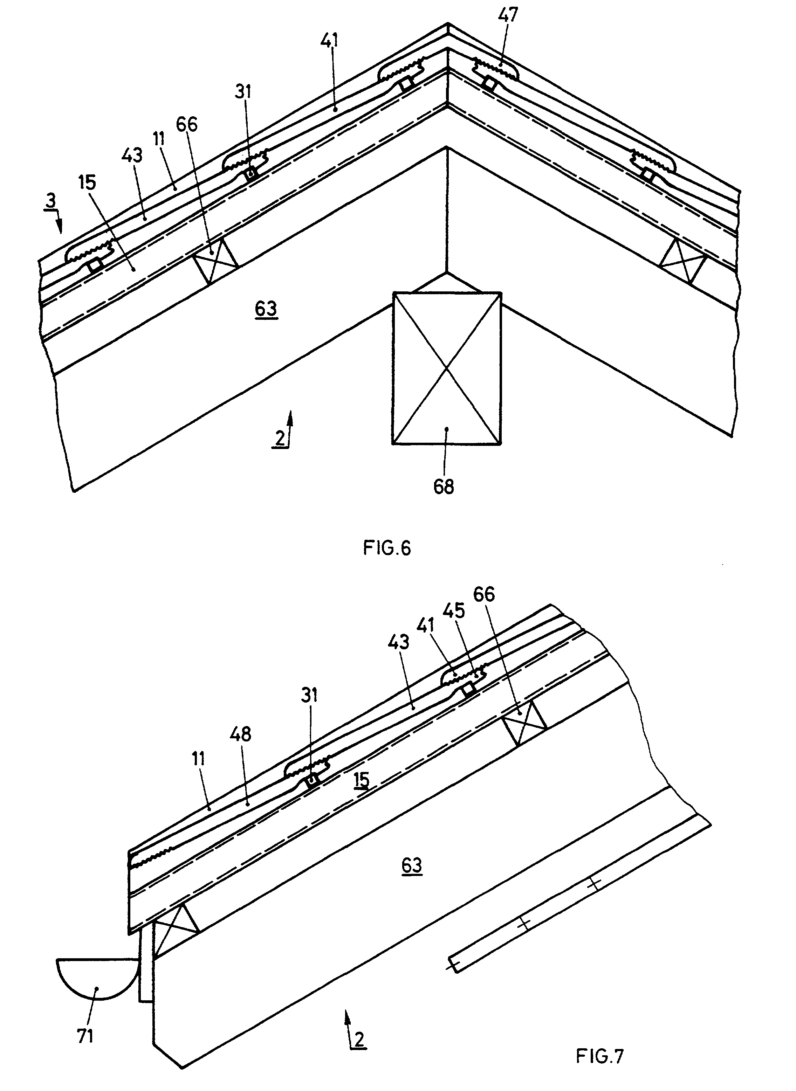

Fig. 7 zeigt eine Dachkonstruktion 2 im Bereich der Dachtraufe, speziell gut erkennbar durch die Regenrinne 71. Wiederum ist das Neigeprofil 3 auf einer Lattung 66 angeordnet, wobei entsprechend dem Dachtraufen-Abschluss das Neigeprofil 3 abgeschrägt abgeschnitten ist.

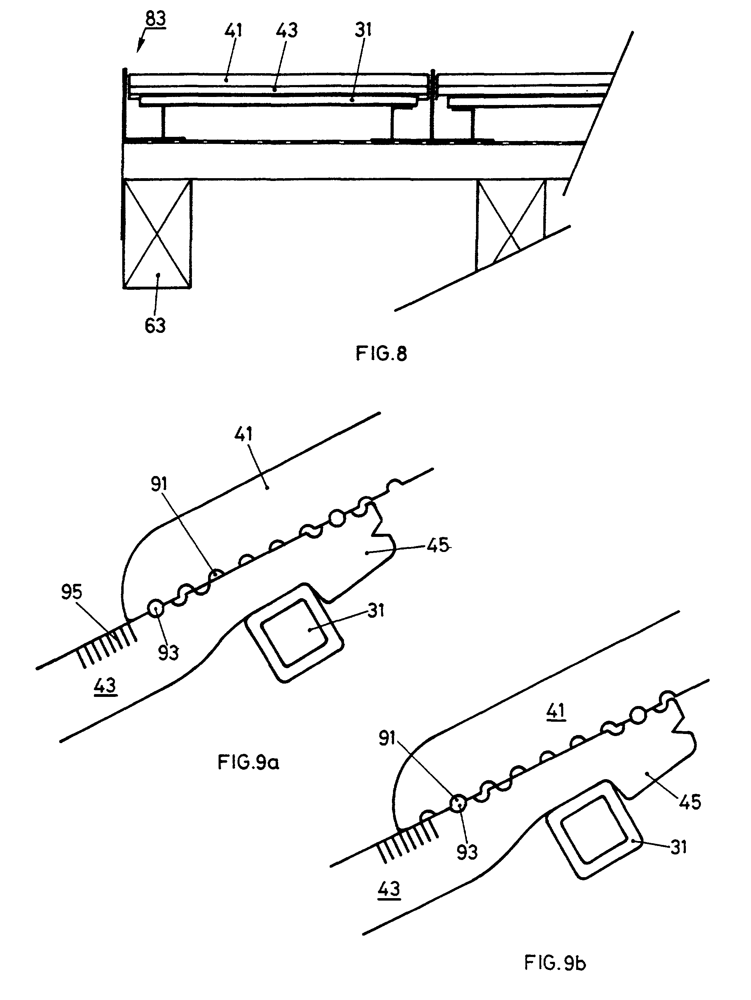

Fig. 8 wiederum zeigt den seitlichen Dachabschluss, wobei nun das seitlich endständig angeordnete Neigeprofil bzw. seitliche Endprofil 83 weitgehendst einem "halben" U-Profil gemäss den vorangehenden Figuren entspricht.

In den Fig. 9a und 9b ist der Überlappungsbereich 7 zweier in Neigerichtung benachbarter und sich überlappender Dachabdeckplatten 41 und 43 dargestellt, wobei nun im Bereich der Überlappung an der Oberfläche der Abdeckplatten quer zur Neigerichtung verlaufende Einkerbungen bzw. Rillen 91 und 93 erkennbar sind. Durch diese Rillen 91 und 93 wird eine sogenannte aerodynamische Sperre gebildet, wodurch weder Windzug noch Feuchtigkeit durch den Überlappungsbereich in die Dachkonstruktion gelangen kann.

In den Fig. 9a und 9b ist weiter erkennbar, dass unterschiedliche Dimensionen des Daches in Neigerichtung ausgeglichen werden können, indem die Überlappung in Fig. 9b grösser ist als die Überlappung in Fig. 9a, was durch die Skala 95 erkennbar ist. Ebenfalls erkennbar in den Fig. 9a und 9b ist einerseits das Auflageprofil 31 sowie je die Haltenase 45, welche das Auflageprofil 31 hintergreift und somit die Dachabdeckplatte 43 auf der Dachkonstruktion sicher festlegt.

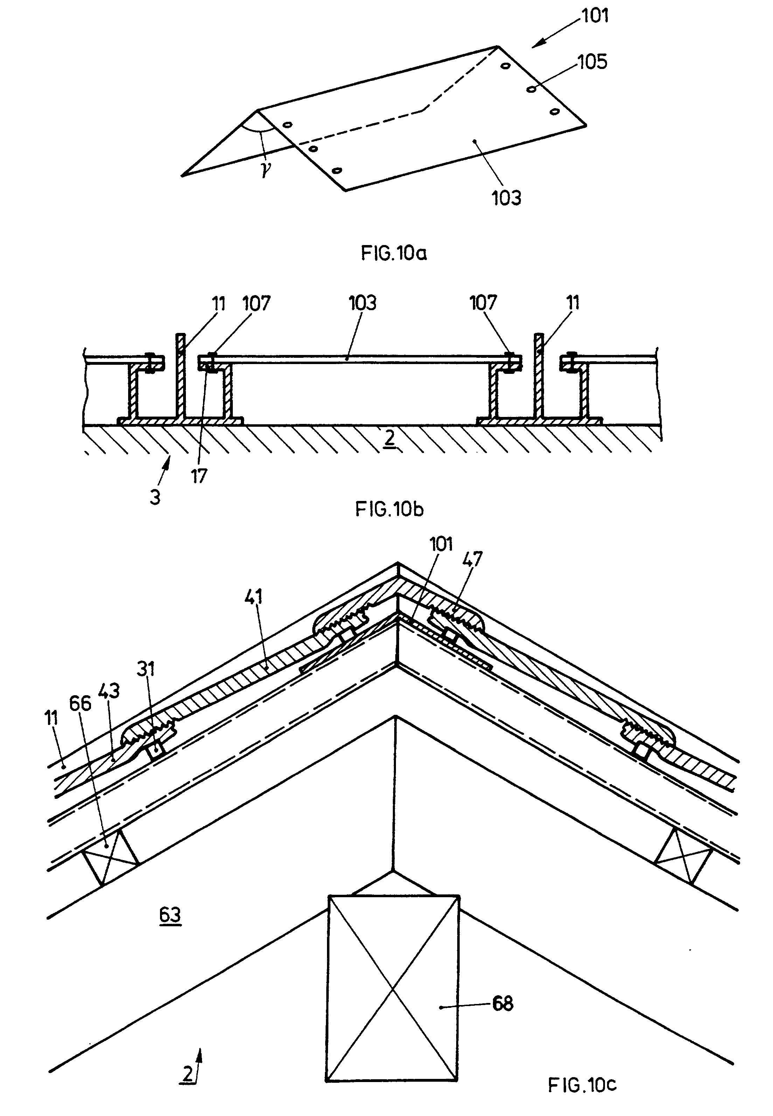

In den Fig. 10a bis 10c ist eine mögliche Variante der Befestigung der Neigeprofile im Firstbereich eines Daches dargestellt. Dabei zeigt Fig. 10a in Perspektive ein Festhalteblech 101, welches mittig geknickt ist und dadurch zwei Seitenflächen 103 aufweist, wobei der mittige Knickwinkel γ zwischen den beiden schrägwinklig zueinander stehenden Seitenflächen dem von den beiden Dachflächen eingeschlossenen Winkel entspricht. Je entlang der Seitenränder der beiden Flächen 103 sind beispielsweise Lochungen 105 vorgesehen, um das Firstblech 101 mit Neigeprofilen fest zu verbinden.

Fig. 10b zeigt schematisch die Befestigung der Neigeprofile 3 im Querschnitt im Firstbereich eines Daches, wobei jeweils zwischen zwei Neigeprofilen 3 je eine Firstplatte 101 angeordnet wird, von welcher je eine Seitenfläche 103 auf den Auflagepartien 17 der Neigeprofile 3 aufliegend fest mit diesem verbunden sind. Das Befestigen kann beispielsweise mittels Nieten 107 erfolgen, oder aber durch andere geeignete Festhalte- bzw. Verbindungsmittel. Aus Fig. 10b deutlich erkennbar ist, dass die Breite je einer Firstplatte 101 in etwa dem Abstand je der beiden mittleren Stege 11 von zwei benachbart angeordneten Neigeprofile 3 entspricht.

Aus Fig. 10c schlussendlich, in welcher analog zu Fig. 6 der Firstbereich eines Daches im Querschnitt dargestellt ist, ist das Befestigen der Neigeprofile mittels der Firstplatte 101 deutlich erkennbar. Dadurch, dass die Firstplatte 101, den First übergreifend angeordnet ist, und an beiden Seitenflächen 103 dieser Platte je Neigeprofile fest mit der Platte verbunden angeordnet sind, ergibt sich eine stabile Halterung der Neigeprofile im Firstbereich des Daches.

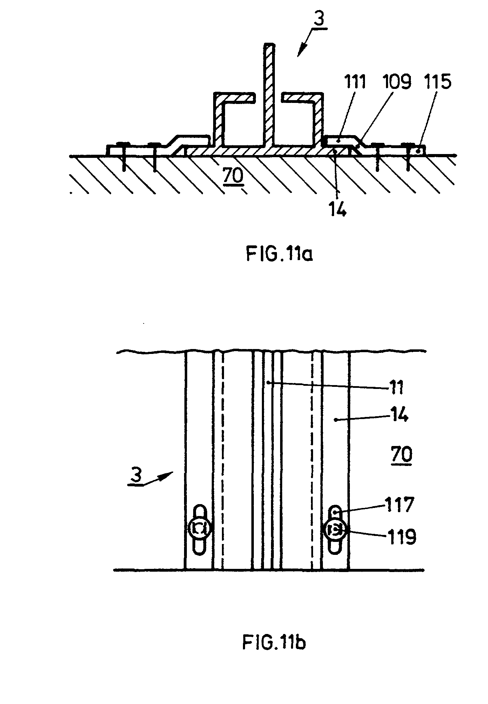

In den Fig. 11a und 11b sind zwei Ausführungsvarianten je einer Befestigung der Neigeprofile 3 im Bereich der Traufe bzw. des unteren Dachendes dargestellt, wie beispielsweise in Fig. 7 abgebildet. Dabei zeigt Fig. 11a das Neigeprofil 3 im Querschnitt und angeordnet auf dem Anschlagholz 70, wie dargestellt in Fig. 7. Da infolge Temperaturunterschiede, insbesondere aus einem Metall gefertigte Neigeprofile, Längsbewegungen ausführen, ist es nun wichtig, dass die Verbindung zwischen Neigeprofil und der darunterliegenden Dachkonstruktion derart ist, dass Längsbewegungen nicht zu Beschädigungen der Dachkonstruktion führen bzw. dass derartige Längsdimensionsschwankungen möglich sind. Durch die in der Fig. 11a dargestellten Befestigungsanordnung des Neigeprofiles 3 im Bereich des Anschlagholzes 70 sind Längsbewegungen möglich. Je die beidseits vorstehenden Randabschnitte 14 des Neigeprofiles 3 werden mittels eines Befestigungsbleches 109 gehalten, welches getrennt durch eine mittige Abstufung zwei Auflageabschnitte 111 und 115 aufweist, wobei jeder Randabschnitt 14 durch den Halteabschnitt 111 fest auf der Dachkonstruktion gehalten wird. Der andere Abschnitt dieser Haltebleche 109 wird fest auf dem Anschlagholz 70 befestigt. Aus Fig. 11a nun deutlich erkennbar kann sich das Neigeprofil in Längsrichtung ausdehnen bzw. zusammenziehen, währenddem ein Abheben des Neigeprofiles von der Dachkonstruktion unmöglich ist.

Fig. 11b zeigt eine weitere Möglichkeit des Befestigens des Neigeprofiles 3, beispielsweise auf dem Anschlagholz 70, wobei Fig. 11b eine Ansicht von oben zeigt. Das Neigeprofil 3 weist in seinen beiden Seitenrändern 14 je längsausgedehnte Lochungen 117 auf, durch welche hindurchragend das Neigeprofil 3 auf dem Anschlagholz 70 mittels Befestigungsbolzen oder Schrauben 119 befestigt ist. Wiederum ist deutlich erkennbar, dass eine Längsdehnung bzw. ein Zusammenziehen des Neigeprofiles entsprechend der Grösse der Lochungen 117 möglich ist, währenddem andererseits ein Abheben des Neigeprofils von der Dachkonstruktion unmöglich ist.

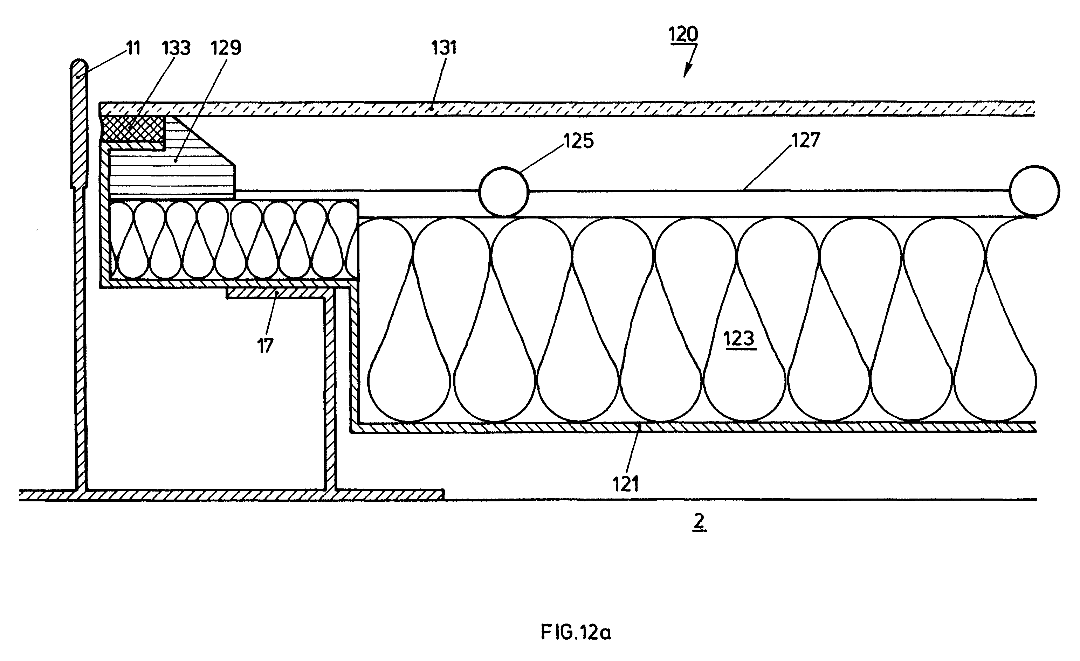

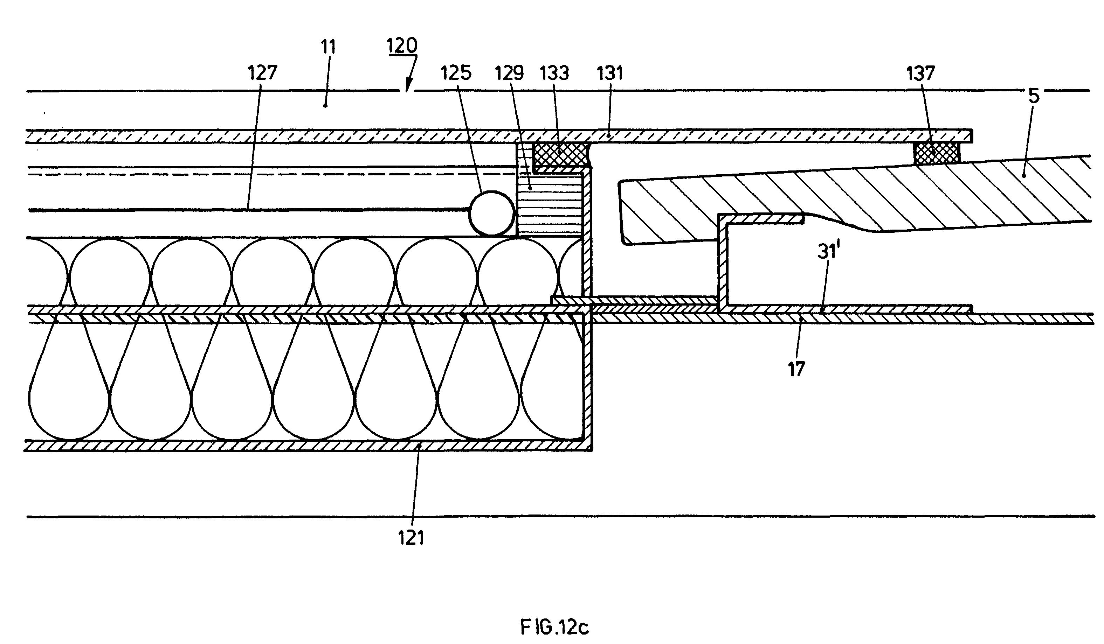

In den Fig. 12a bis 12c ist das Anordnen von Sonnenkollektorelementen unter Verwendung der erfindungsgemäss beanspruchten Neigeprofile schematisch dargestellt. Dabei zeigt Fig. 12a ausschnittsweise das Anordnen eines Sonnenkollektorelementes in einer erfindungsgemässen Dachkonstruktion im Querschnitt. Das Sonnenkollektorelement 120 weist eine Schale bzw. Wanne 121 auf, beispielsweise bestehend aus einem Metall, wie Aluminium oder einem verstärkten Kunststoff. In diese Wanne eingelassen ist ein Isolationskörper 123, beispielsweise aus Mineralwolle gefertigt. Auf diesem Isolationskörper 123 aufliegend angeordnet ist das eigentliche Absorberelement, bestehend aus Rohrschlangen 125, für das wärmeaufnehmende Medium sowie zwischen den Rohrschlangen angeordneten Absorberlamellen 127. Seitlich begrenzt wird das Absorberelement durch einen Holzrahmen 129, auf welchem aufliegend ein Abdeckelement 131 angeordnet ist, beispielsweise hergestellt aus einem besonders wärmedurchlässigen, bruchfesten Glas. Um Dimensionsschwankungen dieses Abdeckglases auszugleichen ist dieses über eine flexible Kunststoffmasse 133 mit dem seitlichen Holzrahmen 129 bzw. dem Wannenkörper 121 verbunden. Das ganze Sonnenkollektorelement 120 ist derart ausgebildet, dass es seitlich auf den Auflagepartien 17 aufliegend zwischen zwei Neigeprofilen 3 "eingehängt" werden kann.

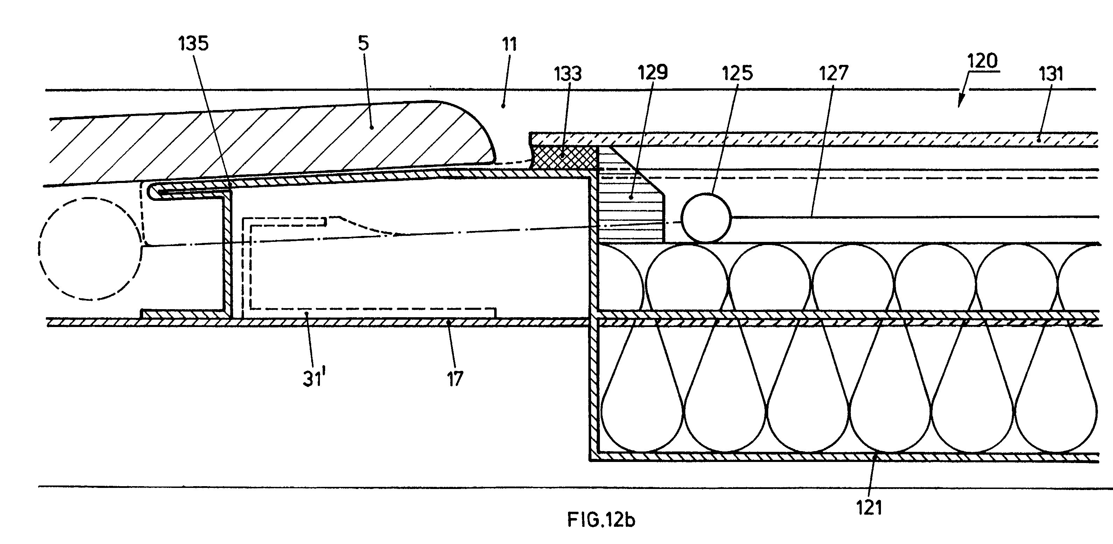

Fig. 12b zeigt die obere Anschlusspartie des Sonnenkollektorelementes 120 im Längsschnitt, um zu zeigen, wie der Uebergang von Sonnenkollektorelement zur oberhalb des Elementes angeordneten Dachabdeckplatte 5 ausgestaltet ist. Ein Sonnenkollektorelement kann sich zwischen zwei Neigeprofilen über den Bereich mehrerer Dachabdeckplatten erstrecken, wie beispielsweise über 3 oder 4 Dachabdeckplatten. Am oberen Ende ist das Sonnenkollektorelement, ebenfalls an einem Auflageprofil 31 bzw. wie in Fig. 12b dargestellt 31' dieses hintergreifend, eingehängt, und zwar indem die Wanne 121 kopfseitig ein hakenartiges Element 135 aufweist. Der kopfseitige Abschluss des Sonnenkollektorelementes 120 selbst ist analog dem seitlichen Abschluss ausgebildet, indem das Absorberelement, aufweisend Leitungen 125 und dazwischenliegende Lamellen 127, wiederum seitlich durch einen Holzrahmen 129 begrenzt ist, auf welchem aufliegend das Abdeckglas 131 angeordnet ist. Mit der Wanne resp. dem Holzrahmen fest verbunden ist das Abdeckglas 131 über eine Elastomermasse 133, wobei es sich beispielsweise um eine Polyurethan- oder um eine Silikonmasse handeln kann.

Auf dem kopfseitig an der Wanne 121 angeordneten, das Auflageprofil 31' hintergreifenden, hakenartigen Element 135 aufliegend, ist in Fig. 12b die benachbart angeordnete Dachabdeckplatte 5 dargestellt, welche oberhalb des Sonnenkollektorelementes 120 angeordnet ist.

Analog zeigt Fig. 12c den unteren Abschluss des Sonnenkollektorelementes 120 wiederum im Längsschnitt, wobei nun, im Gegensatz zum oberen Abschluss, beim unteren Abschluss die Glasabdeckung 131 über den seitlichen Holzrahmen 129 und die Elastomerverbindung 133 überragend ausgebildet ist, um die unterhalb des Sonnenkollektorelementes angeordnete Dachabdeckplatte 5 zu überragen. Um zwischen Glasabdeckung 131 und der Dachabdeckplatte 5 ein Aufwärtsfliessen, beispielsweise von Regenwasser, zu verhindern, ist eine wiederum elastomere bzw. elastische Dichtung 137 angeordnet.

Selbstverständlich handelt es sich bei dem in den Figuren 12a bis 12c dargestellten Sonnenkollektorelement 120 lediglich um eine mögliche Ausführungsvariante, welche auf x-beliebige Art und Weise abgeändert, modifiziert oder ergänzt werden kann. So ist es selbstverständlich möglich, derartige Sonnenkollektorelemente über die gesamte Neigefläche des Daches erstreckend auszubilden, oder aber Kleinstsonnenkollektorelemente vorzusehen, welche jeweils nur die Grösse einer einzigen Dachabdeckplatte aufweisen. Auch die Ausgestaltung des Kollektorelementes selbst ist vielfältig und ist im Prinzip nicht Gegenstand der vorliegenden Erfindung.

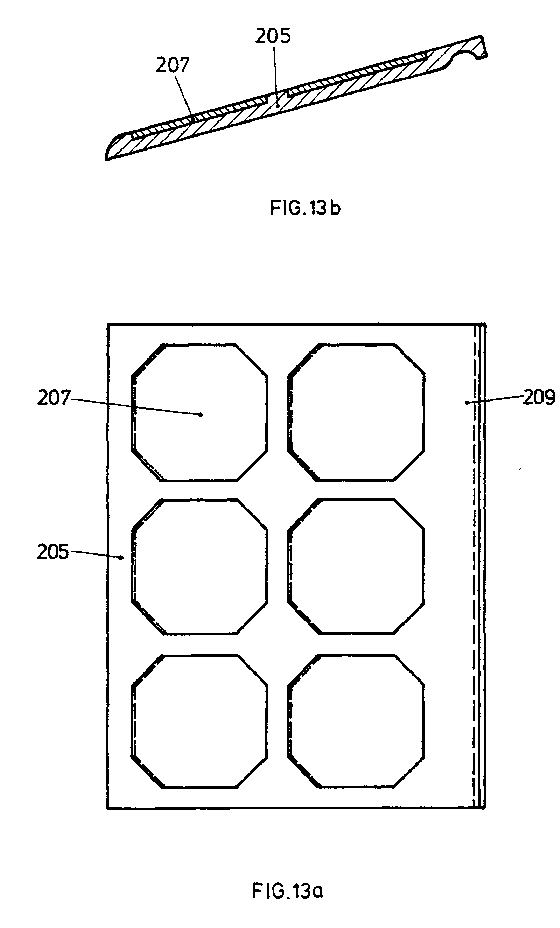

Schliesslich ist in den Fig. 13a und 13b eine Dachabdeckplatte 205 in Ansicht von oben und im Querschnitt dargestellt, enthaltend beispielsweise 6 fotovoltaische Kollektorelemente 207, welche insbesondere in der Draufsicht gemäss Fig. 13a gut erkennbar sind. Im rückseitigen, in der Regel durch Licht oder die Sonne nicht beschienenen Abschnitt der Dachabdeckplatte 205 sind Steuerelemente, Verkabelungen und dergleichen vorgesehen, welcher Abschnitt in Fig. 13a mit 209 bezeichnet ist.

Wiederum handelt es sich bei den Darstellungen in den Fig. 13a und 13b lediglich um ein Beispiel, und selbstverständlich können derartige fotovoltaische Elemente x-beliebig ausgebildet sein. Wiederum stellen die fotovoltaischen Elemente für sich selbst keinen Gegenstand der vorliegenden Erfindung dar, sondern lediglich die Kombination mit der erfindungsgemässen Dachabdeckung.

Bei den in den Figuren 1 bis 13 dargestellten Ausgestaltungen der erfindungsgemässen Dachabdeckanordnung handelt es sich selbstverständlich nur um Beispiele, welche in x-beliebiger Art und Weise abgeändert, ergänzt oder modifiziert werden können im Schutzbereicher der Anspruchssatzes. So wird beispielsweise wenig über die Materialwahl der Profile ausgesagt wie auch über die Ausgestaltung der Dachabdeckplatte. Insbesondere ermöglicht die erfindungsgemässe Dachabdeckanordnung ein vielfältiges Gestalten einer Dachabdeckung, indem sowohl Profile wie auch die Dachabdeckplatten unterschiedlich ausgebildet sein können und insbesondere auch unterschiedliche Farben aufweisen können. Insbesondere ist die erfindungsgemäss vorgeschlagene Dachabdeckung speziell geeignet für das Anordnen von Solar- bzw. fotovoltaischen Elementen, zur Bildung beispielsweise eines sogenannten "Energiedaches".

## Patentansprüche

1. Anordnung zum Abdecken einer geneigten Dachfläche mit
- im wesentlichen in Neigerichtung verlaufende, voneinander beabstandete, längsausgebildete Profile bzw. Neigeprofile (3) mit mindestens einer Auflagepartie (17) für das Anordnen von Dachabdeckplatten (5, 41, 43), sowie
- Dachabdeckplatten (5, 41, 43), deren Dimensionierung derart ist, dass sie je zwischen zwei benachbarte Neigeprofile (3) positioniert sind und den Abstand zwischen den benachbarten Neigeprofilen wenigstens nahezu überdecken und die einander wie Dachziegel in der Neigerichtung des Daches überlappen,
**gekennzeichnet durch** Auflageprofile (31, 31'), auf welchen die Dachabdeckplatten angeordnet sind und welche wenigstens nahezu quer zu den Neigeprofilen (3) verlaufend angeorndet sind, welche Auflageprofile, im wosentlichen der Ausdehnung der Dachabdeckplatten in Neigerichtung entsprechend, voneinander beabstandet angeordnet sind und je endständig in Einkerbungen oder den Auflagepartien (17) der Neigeprofile (3) an- bzw. aufliegend angeordnet sind, wobei der Querschnitt je der Neigeprofile U-förmig ausgebildet ist, mit je an den beiden U-Schenkelenden (15) wenigstens nahezu senkrecht dazu den einwärtsgebogenen Randauflagepartien (17), und wobei wenigstens nahezu mittig an der U-Basis (13) ein senkrecht dazu in Längsrichtung des Neigeprofiles (3) verlaufender, längsausgebildeter Steg (11) angeordnet ist, dessen Höhe die beiden U-Schenkel überragt, so dass der Steg aus dem U-Querschnitt herausragt.

2. Anordnung nach Anspruch 1, **dadurch gekennzeichnet, dass** die Auflageprofile (31) im Querschnitt ein viereckiges, vorzugsweise ein wenigstens nahezu quadratisches Hohlprofil aufweisen und mit den Neigeprofilen (3) vorzugsweise wieder lösbar fest verbunden sind.

3. Anordnung nach einem der Ansprüche 1 oder 2, **dadurch gekennzeichnet, dass** die Auflageprofile (31') im Querschnitt U-förmig ausgebildet sind, mit einem längeren (33') und einem kürzeren (36') U-Schenkel, wobei der kürzere U-Schenkel endständig einwärtsgebogen ausgebildet ist und wobei das Auflageprofil auf der längeren U-Schenkelebene liegend in der Einkerbung oder auf der Randauflagepartie (17) des Neigeprofiles aufliegt und wobei das Auflageprofil vorzugsweise wieder lösbar fest mit dem Neigeprofil verbunden ist.

4. Anordnung nach einem der Ansprüche 1 bis 3, **dadurch gekennzeichnet, dass** die Neige- und/oder Auflageprofile aus Eisenblech, aus stranggepresstem Aluminium und/oder aus einem verstärkten Polymer gefertigt sind.

5. Anordnung nach einem der Ansprüche 1 bis 4, **dadurch gekennzeichnet, dass** die Dachabdeckplatten Haltepartien wie Haltenasen (45) aufweisen, um in Einkerbungen des Neigeprofiles einzugreifen, oder um die Auflageprofile (31, 31') in Neigerichtung oberhalb zu hintergreifen, um die Dachabdeckplatten sicher auf dem Dach fest anzuordnen.

6. Anordnung nach einem der Ansprüche 1 bis 5, **dadurch gekennzeichnet, dass** die Dachabdeckplatten im Bereich (7) des sich gegenseitigen Überlappens quer zur Neigerichtung verlaufende Einkerbungen oder Nuten (91, 93) aufweisen zur Bildung einer sogenannten aerodynamischen Sperre.

7. Anordnung nach einem der Ansprüche 1 bis 6, **dadurch gekennzeichnet, dass** die Dachabdeckplatten ziegelartig aus Ton gefertigt sind.

8. Anordnung nach einem der Ansprüche 1 bis 6, **dadurch gekennzeichnet, dass** die Dachabdeckplatten aus mineralischen Materialien, wie insbesondere gepressten mineralischen Fasern oder aus einem verstärkten Polymer gefertigt sind.

9. Anordnung nach einem der Ansprüche 1 bis 8, **dadurch gekennzeichnet, dass** mindestens ein Teil der Dachabdeckplatten durch sogenannte Sonnenkollektorplatten bzw. fotovoltaische Elemente gebildet wird.

10. Anordnung nach einem der Ansprüche 1 bis 9, **dadurch gekennzeichnet, dass** die Profile und/oder Dachabdeckplatten mindestens zum Teil farbig und/oder gemustert ausgebildet sind.

11. Anordnung nach einem der Ansprüche 1 bis 10, **dadurch gekennzeichnet, dass** zwei benachbarte Dachabdeckplatten mittels klemmenartiger Mittel fest miteinander verbunden sind.

12. Anordnung nach einem der Ansprüche 1 bis 11, **dadurch gekennzeichnet, dass** die Neigeprofile (3) im Firstbereich festgelegt sind, und entlang der geneigten Dachfläche mindestens in Längsrichtung der Profile bzw. in Dachneigerichtung mit der Möglichkeit gleitend bzw. sich ausdehnend oder zusammenziehend bewegend auf der Dachkonstruktion angeordnet sind, wobei vorzugsweise im Bereich der Traufe bzw. dem unteren Dachabschluss Mittel (109, 119) vorgesehen sind, um die Profile (3) am Dach festzuhalten.

13. Anordnung nach Anspruch 12, **dadurch gekennzeichnet, dass** im Firstbereich die Neigeprofile (3) mittels den Dachfirst übergreifenden, plattenartigen Elementen (101) fest angeordnet bzw. festgehalten sind, welche Elemente (101) vorzugsweise ca. der Breite einer Dachabdeckplatte (5) entsprechen und mit den Neigeprofilen (3), auf den Randauflagepartien (17) aufliegend, fest verbunden sind, und diese auf der Dachkonstruktion halten.

14. Anordnung nach einem der Ansprüche 1 bis 13, **dadurch gekennzeichnet, dass** zwischen den Neigeprofilen (3) und unterhalb der Dachabdeckplatten (5) Sonnenkollektorelemente (120) angeordnet sind, und die Dachabdeckplatten (5) aus für wärmeund/oder lichtdurchlässigen Materialien, wie insbesondere Glas, gefertigt sind.

15. Anordnung nach Anspruch 14, **dadurch gekennzeichnet, dass** im Bereich der angeordneten Sonnenkollektoren (120) keine Dachabdeckplatten vorgesehen sind, und eine wärme- und/oder lichtdurchlässige Dachabdeckung (131) integral auf dem Kollektorelement (120) aufliegend angeordnet ist.

16. Verfahren zur Bildung einer Anordnung nach einem der Ansprüche 1 bis 15, **dadurch gekennzeichnet, dass**
1. Neigeprofile im Abstand entsprechend der Dimensionen der Dachabdeckplatten in Neigerichtung parallel zueinander angeordnet werden und fest mit der darunterliegenden Dachkonstruktion verbunden werden;
2. die Auflageprofile quer zu den Neigeprofilen derart beabstandet zueinander angeordnet werden, dass der Abstand in etwa der Ausdehnung der Dachabdeckplatten in Neigerichtung entspricht, wobei gegebenenfalls unterschiedliche Dimensionen der Dachabdeckplatten und der Dimension des Daches in Neigerichtung auszugleichen sind und
3. die Dachabdeckplatten von der Dachtraufe zum First, d.h. von unten nach oben, angeordnet werden.

17. Verfahren nach Anspruch 16, **dadurch gekennzeichnet, dass** eine mit speziellen Skalen versehene Lehre für das Anordnen der Neige- und Auflageprofile verwendet wird, wobei an der Lehre der Abstand zwischen zwei benachbarten Neigeprofilen sowie der Abstand zweier benachbarter Auflageprofile einstellbar ist.

## Claims

1. Arrangement for covering an inclined roof surface, having
- spaced-apart, longitudinally formed profiles or inclination profiles (3) that run essentially in the direction of inclination and have at least one bearing portion (17) on which roofing panels (5, 41, 43) can be arranged, and
- roofing panels (5, 41, 43), which are dimensioned such that they are positioned between two adjacent inclination profiles (3) and at least more or less span the distance between the adjacent inclination profiles and overlap one another like roofing tiles in the direction of inclination of the roof,
**characterized by** bearing profiles (31, 31') on which the roofing panels are arranged and which run at least more or less transversely to the inclination profiles (3), which bearing profiles are spaced apart from one another essentially in accordance with the extent of the roofing panels in the direction of inclination and, at the ends in each case, are arranged with abutting or bearing action in notches or the bearing portions (17) of the inclination profiles (3), the cross section of each of the inclination profiles being of U-shaped design with the inwardly bent peripheral bearing portions (17) at the two U-leg ends (15) in each case, at least more or less perpendicular to the latter, and there being arranged at least more or less centrally on the U-base (13) a longitudinally formed crosspiece (11) which runs in the longitudinal direction of the inclination profile (3), perpendicularly to the U-base, and which is higher than the two U-legs, with the result that the crosspiece projects out of the U-shaped cross section.

2. Arrangement according to Claim 1, **characterized in that** the bearing profiles (31) have a quadrilateral, preferably at least more or less square, hollow profile in cross section and are fixed, preferably in a re-releasable manner, to the inclination profiles (3).

3. Arrangement according to either of Claims 1 and 2, **characterized in that** the bearing profiles (31') are of cross-sectionally U-shaped design with a relatively long U-leg (33') and a relatively short U-leg (36'), the shorter U-leg being bent inwards at the end, and the bearing profile, lying on the longer U-leg plane, resting in the notch or on the peripheral bearing portion (17) of the inclination profile, and the bearing profile being fixed, preferably in a re-releasable manner, to the inclination profile.

4. Arrangement according to one of Claims 1 to 3, **characterized in that** the inclination and/or bearing profiles are produced from sheet iron, from extruded aluminium and/or from a reinforced polymer.

5. Arrangement according to one of Claims 1 to 4, **characterized in that** the roofing panels have retaining portions such as retaining noses (45) in order to engage in notches of the inclination profile or in order to engage behind the bearing profiles (31, 31') at the top in the direction of inclination, in order for the roofing panels to be fixed reliably on the roof.

6. Arrangement according to one of Claims 1 to 5, **characterized in that**, in the region (7) of the overlap, the roofing panels have notches or grooves (91, 93) running transversely to the direction of inclination in order to form a so-called aerodynamic barrier.

7. Arrangement according to one of Claims 1 to 6, **characterized in that** the roofing panels are produced like tiles from clay.

8. Arrangement according to one of Claims 1 to 6, **characterized in that** the roofing panels are produced from mineral material such as, in particular, pressed mineral fibres or from a reinforced polymer.

9. Arrangement according to one of Claims 1 to 8, **characterized in that** at least some of the roofing panels are formed by so-called solar collector panels or photovoltaic elements.

10. Arrangement according to one of Claims 1 to 9, **characterized in that** the profiles and/or roofing panels are coloured and/or patterned at least in part.

11. Arrangement according to one of Claims 1 to 10, **characterized in that** two adjacent roofing panels are fixed to one another by clamp-like means.

12. Arrangement according to one of Claims 1 to 11, **characterized in that** the inclination profiles (3) are secured in the ridge region and are arranged along the inclined roof surface, at least in the longitudinal direction of the profiles and/or in the direction of inclination of the roof, with the possibility of sliding or expanding or contracting movement on the roof structure, means (109, 119) preferably being provided in the region of the eaves and/or the bottom roof termination in order to secure the profiles (3) on the roof.

13. Arrangement according to Claim 12, **characterized in that**, in the ridge region, the inclination profiles (3) are fixed or secured by means of panel-like elements (101) which engage over the roof ridge, which elements (101) correspond preferably approximately to the width of a roofing panel (5) and are fixed to the inclination profiles (3), resting on the peripheral bearing portions (17), and retain the same on the roof structure.

14. Arrangement according to one of Claims 1 to 13, **characterized in that** solar collector elements (120) are arranged between the inclination profiles (3) and beneath the roofing panels (5), and the roofing panels (5) are produced from diathermic and/or translucent materials such as, in particular, glass.

15. Arrangement according to Claim 14, **characterized in that** there are no roofing panels provided in the region of the solar collectors (120) arranged in position, and a diathermic and/or translucent roof covering (131) rests integrally on the collector element (120).

16. Method of forming an arrangement according to one of Claims 1 to 15, **characterized in that**
1. inclination profiles are arranged parallel to one another at a distance apart which corresponds to the dimensions of the roofing panels in the direction of inclination, and are fixed to the roof structure located therebeneath;
2. the bearing profiles are spaced apart transversely to the inclination profiles such that the distance corresponds approximately to the extent of the roofing panels in the direction of inclination, the intention being to compensate for possibly different dimensions of the roofing panels and the dimension of the roof in the direction of inclination, and
3. the roofing panels are arranged from the eaves of the roof to the ridge, i.e. from bottom to top.

17. Method according to Claim 16, **characterized in that** a gauge provided with special scales is used for arranging the inclination and bearing profiles in position, it being possible to adjust on the gauge the distance between two adjacent inclination profiles and the distance between two adjacent bearing profiles.

## Revendications

1. Dispositif pour couvrir une surface de toit inclinée, comportant
- des profilés ou des profilés inclinés (3) de forme allongée, espacés et s'étendant sensiblement dans le sens d'inclinaison, qui sont pourvus d'une partie d'appui (17) pour la disposition de plaques de recouvrement de toit (5, 41, 43), et
- des plaques de recouvrement de toit (5, 41, 43) dont le dimensionnement est tel que chacune d'elles est positionnée entre deux profilés inclinés voisins (3) et qu'elles couvrent au moins approximativement l'espace entre les profilés inclinés voisins, et qui se chevauchent comme des tuiles dans le sens d'inclinaison du toit,
**caractérisé par** des profilés d'appui (31, 31') sur lesquels sont disposées lesdites plaques de recouvrement de toit et qui sont disposés au moins approximativement transversalement par rapport aux profilés inclinés (3), ces profilés d'appui étant espacés les uns des autres pratiquement suivant les dimensions des plaques de recouvrement de toit dans le sens d'inclinaison et étant disposés, à leur extrémité, dans des encoches ou sur les parties d'appui (17) des profilés inclinés (3), étant précisé que la section transversale de chaque profilé incliné a la forme d'un U, avec des parties d'appui de bord (17), aux deux extrémités de branche de U (15), qui sont pliées vers l'intérieur au moins approximativement perpendiculairement à celles-ci, et qu'il est prévu, au moins approximativement au milieu de la base du U (13), une aile longitudinale (11) qui est perpendiculaire à cette base, qui s'étend dans le sens longitudinal du profilé incliné (3) et dont la hauteur est supérieure à celle des deux branches du U, de sorte que cette aile dépasse de la section transversale en U.

2. Dispositif selon la revendication 1, **caractérisé en ce que** les profilés d'appui (31) présentent en section transversale un profil creux rectangulaire, de préférence au moins approximativement carré, et sont reliés solidement, de préférence de manière amovible, aux profilés inclinés (3).

3. Dispositif selon la revendication 1 ou 2, **caractérisé en ce que** les profilés d'appui (31') ont la forme d'un U, en section transversale, avec une branche longue (33') et une branche courte (36'), étant précisé que la branche courte est pliée vers l'intérieur, à son extrémité, que le profilé d'appui est posé avec le plan de branche longue dans l'encoche ou sur la partie d'appui de bord (17) du profilé incliné, et que le profilé d'appui est fixé solidement, de préférence de manière amovible, au profilé incliné.

4. Dispositif selon l'une des revendications 1 à 3, **caractérisé en ce que** les profilés inclinés et/ou les profilés d'appui sont fabriqués en tôle métallique, en aluminium extrudé et/ou en polymère renforcé.

5. Dispositif selon l'une des revendications 1 à 4, **caractérisé en ce que** les plaques de recouvrement de toit ont des parties de fixation telles que des saillies de fixation (45) destinées à pénétrer dans des encoches du profilé incliné ou à venir en prise derrière les profilés d'appui (31, 31'), par-dessus dans le sens de l'inclinaison, afin d'assujettir lesdites plaques de recouvrement sur le toit.

6. Dispositif selon l'une des revendications 1 à 5, **caractérisé en ce que** les plaques de recouvrement de toit présentent, dans leur zone de chevauchement (7), des encoches ou des rainures (91, 93) transversales par rapport au sens d'inclinaison, pour former ce qu'on appelle un blocage aérodynamique.

7. Dispositif selon l'une des revendications 1 à 6, **caractérisé en ce que** les plaques de recouvrement de toit sont fabriquées en argile à la manière des tuiles.

8. Dispositif selon l'une des revendications 1 à 6, **caractérisé en ce que** les plaques de recouvrement de toit sont fabriquées à partir de matières minérales, en particulier des fibres minérales comprimées, ou à partir d'un polymère renforcé.

9. Dispositif selon l'une des revendications 1 à 8, **caractérisé en ce qu'**une partie au moins des plaques de recouvrement de toit est formée par ce qu'on appelle des plaques formant capteurs solaires ou des éléments photovoltaiques.

10. Dispositif selon l'une des revendications 1 à 9, **caractérisé en ce que** les profilés et/ou les plaques de recouvrement de toit sont au moins en partie colorés et/ou ornés de motifs.

11. Dispositif selon l'une des revendications 1 à 10, **caractérisé en ce que** deux plaques de recouvrement de toit voisines sont reliées solidement entre elles à l'aide de moyens en forme de pinces.

12. Dispositif selon l'une des revendications 1 à 11, **caractérisé en ce que** les profilés inclinés (3) sont fixés dans la zone du faite et sont disposés sur la construction de toit le long de la surface de toit inclinée, au moins dans le sens longitudinal des profilés et dans le sens d'inclinaison du toit, avec une possibilité de déplacement par coulissement, extension ou compression, étant précisé qu'il est prévu des moyens (109, 119) de préférence dans la zone de la gouttière ou du bord inférieur du toit pour bloquer les profilés (3) sur le toit.

13. Dispositif selon la revendication 12, **caractérisé en ce que** dans la zone du faîte, les profilés inclinés (3) sont disposés solidement ou fixés à l'aide d'éléments en forme de plaques (101) qui couvrent le faîte, les éléments (101) correspondant de préférence à peu près à la largeur d'une plaque de recouvrement de toit (5) et étant reliés solidement aux profilés inclinés (3) en étant posés sur les parties d'appui de bord (17), et retenant celles-ci sur la construction de toit.

14. Dispositif selon l'une des revendications 1 à 13, **caractérisé en ce que** des éléments formant capteurs solaires (120) sont disposés entre les profilés inclinés (3) et au-dessous des plaques de recouvrement de toit (5), et ces dernières sont fabriquées à partir de matières qui laissent passer la chaleur et/ou la lumière, en particulier du verre.

15. Dispositif selon la revendication 14, **caractérisé en ce qu'**on ne prévoit pas de plaques de recouvrement de toit dans la zone des capteurs solaires (120), et un recouvrement de toit (131) laissant passer la chaleur et/ou la lumière est disposé en étant intégralement en appui sur l'élément formant capteur (120).

16. Procédé pour former un dispositif selon l'une des revendications 1 à 15, **caractérisé en ce que**
1. des profilés inclinés sont disposés parallèlement, dans le sens de l'inclinaison, avec un écartement correspondant aux dimensions des plaques de recouvrement de toit, et sont reliés solidement à la construction de toit qui se trouve en dessous ;
2. les profilés d'appui sont espacés transversalement par rapport aux profilés inclinés de telle sorte que l'écartement corresponde à peu près aux dimensions des plaques de recouvrement de toit dans le sens de l'inclinaison, des dimensions différentes desdites plaques et du toit pouvant éventuellement être compensées dans le sens de l'inclinaison, et
3. les plaques de recouvrement de toit sont disposées de la gouttière vers le faîte, c'est-à-dire de bas en haut.

17. Procédé selon la revendication 16, **caractérisé en ce qu'**on utilise pour disposer les profilés inclinés et les profilés d'appui un gabarit pourvu de graduations spéciales, l'écartement entre deux profilés inclinés voisins et l'écartement de deux profilés d'appui voisins étant réglables sur ce gabarit.
